# EUROPEAN PATENT SPECIFICATION

(11) **EP 2 506 178 B1**
(45) Date of publication and mention of the grant of the patent: **24.07.2013**
(21) Application number: 11168406.4
(22) Date of filing: 01.06.2011
(51) Int. Cl.: G06F 21/00, G06F 3/048, G06F 21/31

(54) **User interface, touch-controlled device and method for authenticating a user of a touch-controlled device**
Benutzerschnittstelle, berührungsgesteuerte Vorrichtung und Verfahren zur Authentifizierung eines Benutzers einer berührungsgesteuerten Vorrichtung
Interface utilisateur, dispositif à commande tactile et procédé pour authentifier un utilisateur d'un dispositif à commande tactile

(30) Priority: 30.03.2011 US 201113076027
(43) Date of publication of application: 03.10.2012
(73) Proprietor: Acer Incorporated, Hsichih, Taipei Hsien 221 (TW)
(72) Inventor: Sip, Kim Yeung, Taipei (TW)
(74) Representative: Michalski Hüttermann & Partner Patentanwälte

(56) References cited:
- US-A1- 2004 104 896
- US-A1- 2009 307 768
- US-A1- 2010 245 244
- MANKOFF J ET AL: "CIRRIN: A WORLD-LEVEL UNISTROKE KEYBOARD FOR PEN INPUT", 1 January 1998 (1998-01-01), UIST '98. 11TH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY. SAN FRANCISCO, CA, NOV. 1 - 4, 1998; [ACM SYMPOSIUM ON USER INTERFACE SOFTWARE AND TECHNOLOGY], NEW, XP000970946, ISBN: 978-1-58113-034-8 * the whole document *

## Description

### BACKGROUND OF THE INVENTION

### Field of Invention

A user interface, a touch-controlled device and a method for authenticating a user of a touch-controlled device.

### Description of the Related Art

Touch screens are becoming more popular for use both as displays and as user input devices, especially on portable devices such as mobile telephones, personal digital assistants, GPS's, video games, personal laptops etc. One problem associated with using a touch screen would be an unintentional activation that is caused by an unintentional touch.

Therefor, such devices often include a self locked system to lock the screen after a certain period of idleness. Devices with touch screens may be unlocked by unlocking procedures typified by pressing a predefined set of buttons or by entering a code.

Mankoff et al describes in "Cirrin: A world-level unistroke keyboard for pen input", 1 January 1998, UIST '98, 11^{th} annual symposium on user interface software and technology, proceedings of the ACM symposium on user interface software and technology, a touch-controlled device, comprising a touch screen, a processor, and a non-transitory computer-readable storage medium encoded with a computer program stored thereon.

US 2004/104896 A1 describes a reduced keyboard system for text input on electronic devices, mainly for use with handheld touchscreen devices, comprising a virtual keyboard and an input device.

US 2009/307768 A1 describes a password input system includes a touch screen, a storing module, and an authentication module.

US 2010/245244 A1 describes a character inputting device, including an input unit, a detection unit, and a control unit, whereby the input unit is configured such that a plurality of input areas is radially arranged around a reference location, one or more characters are assigned to each input area, and the respective characters can be selected through different input actions.

Upon unlocking, a user authenticating system may also be incorporated to protect the personal information saved in the portable device. Users thus need to enter the code or the password before using the device.

In general, a password may contain four to ten numerals. However, these unlock procedures have drawbacks.

For example, users have to lift their finger and touch the panel multiple times, which may cause instability while users hold the device, especially when the user uses only one hand to both hold the devices and enter the password.

There is another problem in connection with entering the passwords. Conventionally, a predefined password panel shows on a predefined location of the screen to present a keyboard. A user has to move the finger to the predefined location to input the password. Even more, the user must initiate the authentication at one area and input the password in another area.

Therefore, it is desirable to develop an improved interface for a device with a touch screen.

### SUMMARY OF THE INVENTION

The present invention provides a user interface, a touch-controlled device, and a method for authenticating a user of a touch-controlled device having a touch screen. Upon touching by the user, a core figure with a center and a surrounding area will show on the touch screen, so that the user can input the code by moving a finger or stylus on the touch screen. To initiate the method, a user can touch any point on the touch screen, but preferably a predetermined distance from a nearest edge of the screen. A core figure will show on the touch screen to start the authentication process. The core figure may include a surrounding area and a center, which could be the same location touched by the user. Then, the user moves the finger or stylus within the surrounding area, while continuously in contact with the touch screen, to input an input code for authentication.

The input code can be a predetermined motion or a predetermined symbol to which the user moves his finger.

In the situation that a password code is required, several symbols arranged at a circumference of the core figure also show on the touch screen, so that the user can move the finger toward the symbols to input the input code without lifting the finger or stylus.

If the user prefers a more complicated code, several successive configurations, which could be a series of concentric circles, can be displayed.

The method for authenticating a user of a touch-controlled device having a touch screen can also include that the touch screen receives a preliminary input via the touch screen. Upon receiving the preliminary input, the touch screen presents a core figure that has a center and a surrounding area. Then, the touch screen records an input code comprises a first indicating input. The screen may then call up a password check subroutine saved in the device to compare the input code with a saved data. If the input code matches the saved data, the device unlocks the screen.

### BRIEF DESCRIPTION OF THE DRAWINGS

Further aspects of the present invention will be apparent from the following detailed description of preferred embodiments, referring to the accompanying drawings, in which:
Figure 1 illustrates the core ring of the authenticating procedure;
Figure 2 illustrates one embodiment of the input code inputted in the authenticating process with the interface shown in Figure 1;
Figure 3 illustrates one embodiment of the second codes inputted in the authenticating process with a core ring and a successive ring;
Figure 4 illustrates the embodiment with further successive rings;
Figure 5 illustrates an embodiment with an inward movement;
Figure 6 illustrates an embodiment of the unlock process;
Figure 7 illustrates a flow chart of password check subroutine;
Figures 8-9 illustrate the above discussed procedure in flow chart form when the core ring is active;
Figure 10 illustrates the above discussed procedure in a flow chart form when the successive ring is active; and
Figure 11 illustrates a touch-controlled device which is capable of processing the authenticating procedure.

### DETAILED DESCRIPTION OF PREFERRED EMBODIMENTS

The touch screen can be any electronic visual display that can detect the presence and location of a touch within a display area. The touch screen can be of the resistive type, capacitive type, optical imaging type or infrared type etc.

In the following embodiments, the touch screen is considered to be a capacitive style touch screen. However the technology is not restricted to this type of touch screen and any appropriate type of touch screen may be used. Some other types of touch screens are described further herein.

Indeed, the device and method of the present invention may be implemented on existing hardware solely by appropriate modification or replacement of the software of the device. In practice, the invention will typically be embodied in consumer electronics devices in which the software necessary to perform the present method and to create the present device will be pre-loaded in the CPU of the device.

After a certain period of idleness, the touch screen would be locked by the application preloaded in the computer to avoid the unintentional actuation. When the device stays at the locked mode, the touch screen can still sense the touch by a user to actuate an authenticating process.

The screen provides an interface on the touch screen which allows the user to input codes without moving the user's finger or a stylus out of contact with the touch screen. In general, the interface is preferably displayed as several concentric figures and multiple symbols arranged on each circles. The interface is not restricted to any portion of the touch screen. A touch of any part of the touch screen will start the procedure.

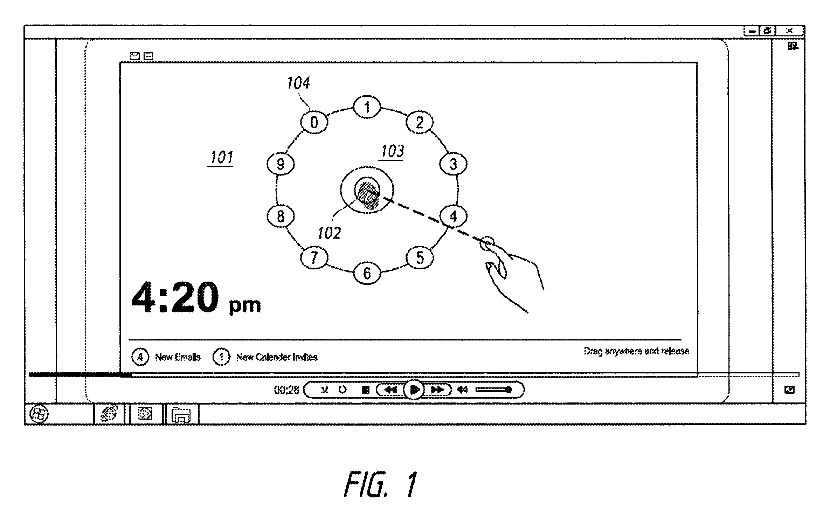

Figure 1 illustrates the first step of the authenticating procedure.

When the user's finger or a stylus (i.e., a touching member) touches anywhere on the locked screen, a core figure shown in Figure 1 appears on the screen to initiate the authenticating procedure. Although a ring is shown, any appropriate figure can be used such as a circle, an oval, a parallelogram or a polygon such as a hexagon, heptagon, octagon, nonagon, decagon, etc.

As can be seen in Figure 1, the core ring 101 may include, but is not limited to, a center 102, a surrounding area 103 and several symbols 104. In this embodiment, the center of the core ring marks the location touched by the user's finger or stylus; that is, the location of the core ring 101 on the touch screen varies depending upon where the user touches the screen. The center 102 is generated at the point where the user first touches the touch screen.

However, the relationship of the center 102 and the touch point could be defined differently. The symbols 104 could alternatively be alphanumeric or purely numeric symbols such as Arabic numerals, Roman numerals, Roman letters, Greek letters, Cyrillic, Arabic, Hebrew, Chinese, Japanese, Korean, etc.

Region 103 is preferably displayed in a color different from center 102 and the display outside of region 103, so that the user may more readily discern where the detecting area is and more confidently move his finger within this area.

At the periphery of the area 103 are several alphanumeric symbols, which may be numbers, e.g. 1, 2, 3..., and 9, for the user to select.

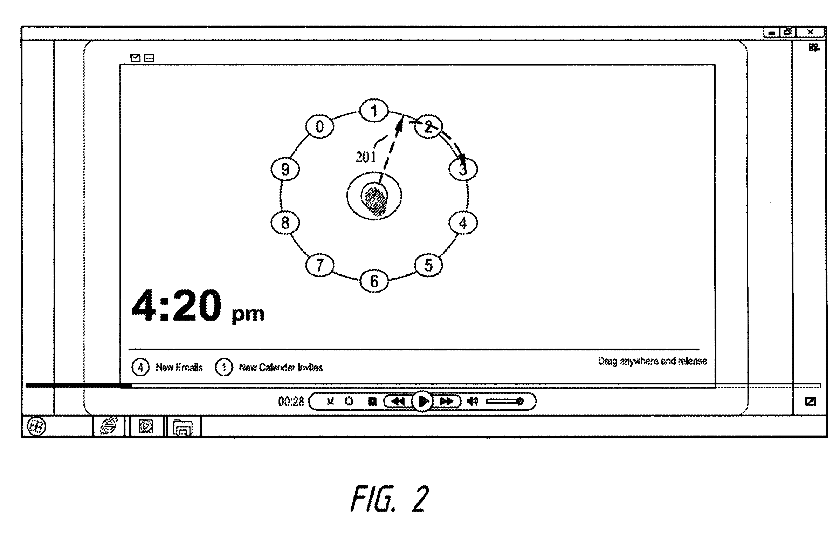

After the core figure 101 (in this case a ring) is presented on the touch screen, the user can move, without lifting, his/her finger outwardly to input the first indicating input 201 of the input code "out", as shown in Fig. 2. A preloaded password check subroutine in the touch-controlled device then checks whether this indicating input is correct. If the input code matches the saved data, the subroutine may decide to present the next step. Otherwise, the subroutine will stop the authorization.

The user can then generate a next input by moving his finger along the periphery of area 103 in either direction, i.e. clockwise or counterclockwise, toward the first number to be selected. Then, the user rests his finger on a symbol arranged on the circumference of the first successive ring. Alternatively, the user can skip the peripheral motion input and simply move his finger from the center 102 to the first symbol 104 in a straight line.

Preferably only one set of symbols is shown in the screen at any given time, so as not to complicate the interface or confuse the user.

If the input code to this point has been correct, there can be at least two options for the next step. If the user's finger or stylus first touches the periphery of area 103 between symbols 104, the device then will record the next movement as either clockwise or counterclockwise. If the user's finger moves straight toward a selected symbol 104, the screen will then record the selected number.

In the embodiment of Figure 2, the user's finger first touches the periphery of area 103 at a location 201 between numbers "1" and "2", and then moves, along the periphery, clockwise toward the number "3". By doing so, the user inputs one moving direction "clockwise" and then inputs a selected symbol "3" to complete the input code "clockwise+3".

After the user selects the number "3", the touch-controlled device will call the preloaded password check subroutine again to compare the input code with the saved data. If the result matches with the saved data, the authenticating process then goes to the next step. If the result does not match, the authenticating process will stop and the screen will return to the locked mode.

Selection by a user of the first number or symbol, as well as selection of successive numbers or symbols, can be recognized by the touch-controlled device in any one or more of several ways. For example, if the user's finger comes to rest on a number or symbol 104 and does not move for a predetermined interval, which could be a small fraction of a second or longer, then this can be interpreted as a selection of the number or symbol 104. Alternatively, selection of a number or symbol 104 can be decided based upon a change in the direction of movement of the user's finger. In the latter case, there is preferably a threshold degree of directional change needed to trigger selection recognition, to avoid a false recognition when the direction of movement of the user's finger changes to only a small degree.

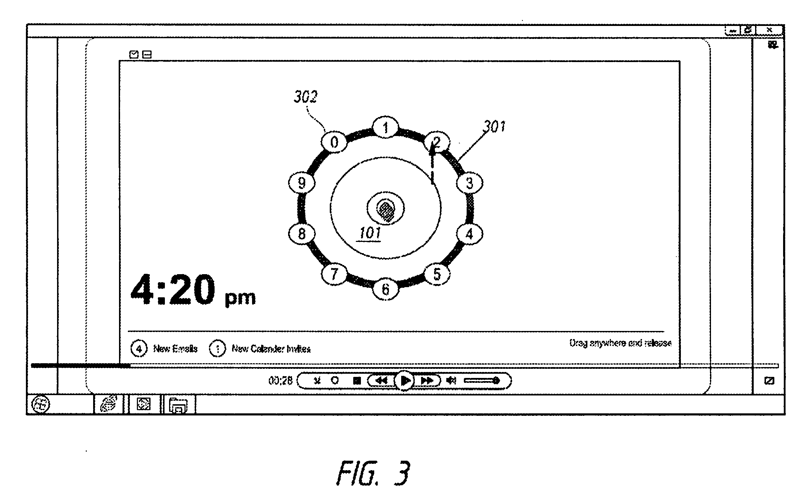

Figure 3 illustrates a first successive figure 301 (in this case a ring) which presents a second set of numbers or symbols for the authenticating process.

In the display shown in Fig. 3, the center 102 and area 103 of the previous core ring 101 remain, but the peripheral ring bearing numbers 104 is no longer displayed. Instead, an outer ring 301 bearing the second set of numbers 302 is now displayed.

Ring 301 is preferably not displayed simultaneously with the previous ring bearing numbers 104. Ring 301 appears to be concentric and radially outward of the ring bearing numbers 104; however, in comparing Figs. 2 and 3 it can be seen that the same effect can be achieved by reducing the radial extent of area 103 and displaying new ring 301 is essentially the same location as the previous ring bearing numbers 104 had been displayed.

Once the display of Fig. 3 is presented, the inputs duplicate those for the first set of numbers 104. That is, a first input may be a detection of the radially outward movement of the user's finger. Alternatively, confirmation of this input may be used as a trigger for displaying ring 301 on the screen.

The user moves his finger, preferably without lifting, toward the second ring of symbols 302 to input the second input code.

In the example of Figure 3, the user's finger or stylus moves straight to the number "2" and stops. With this movement, the user inputs the selected symbol "2". Once the user's finger stops on a selected number for a certain period, the preloaded password check subroutine then again compares the input code with the saved data and decides whether to process a next step of authenticating or to stop the procedure.

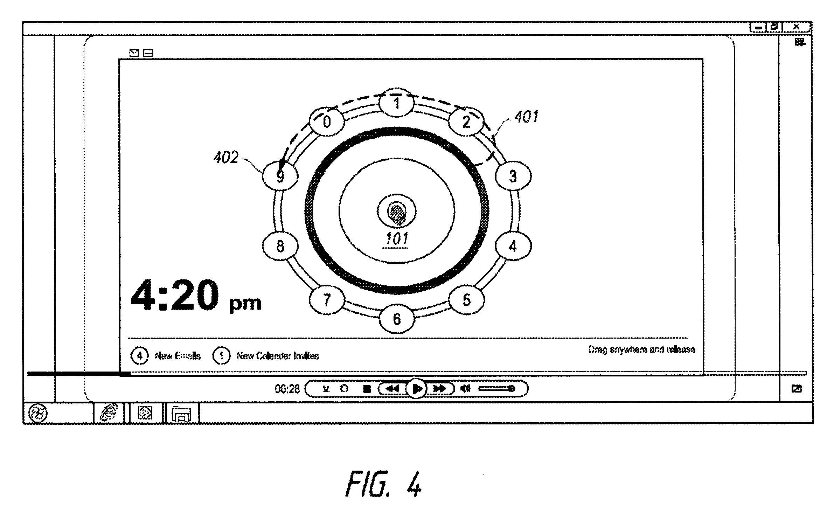

Figure 4 illustrates the display of a third figure (ring) 401 and a third series of symbols 402, following successful selection of a symbol from ring 301. It will be noted that in the display of Fig. 4 the ring 301 remains displayed but the symbols 302 of that ring are no longer displayed. The user then proceeds as described above to input the third input code "out+counterclockwise+9".

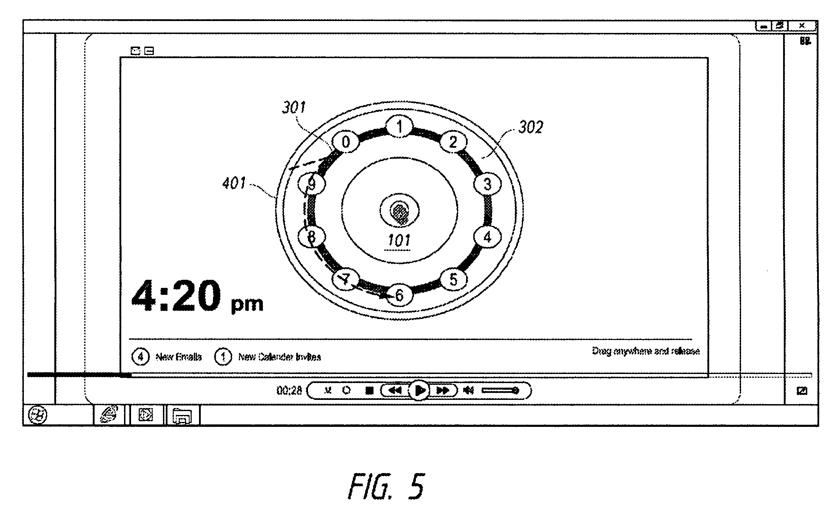

Figure 5 illustrates not only a further step of the present embodiment but also an alternative embodiment of the previous step of the authenticating process. In this figure, after a symbol 402 has been correctly selected by the user, symbols 402 are extinguished but ring 401 remains displayed. Then an inner ring, here designated 301, is displayed.

Radially inward movement of the user's finger is detected as a next input to the authentication routine, although, as before, this input may be included or omitted depending upon how robust the authentication routine is desired to be.

If this inward motion is utilized as an input, then it can likewise be used to trigger display of ring 301 and symbols 302, which in that case are not earlier displayed. The user then can start to input the fourth symbol by moving his finger along ring 301 counterclockwise to number "6" to input "counterclockwise+6".

If the password check subroutine detects that this is the end of the authenticating process, the screen will then be unlocked to a view that was presented on the screen before entering the locked mode.

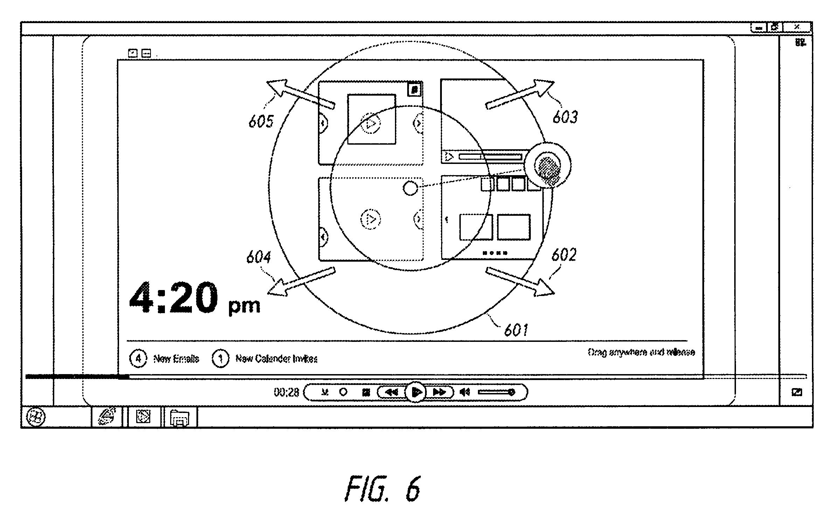

Alternatively, Figure 6 illustrates another embodiment of the last step. In Figure 6, the core ring, numbers and other rings disappear. Instead of returning to the previous view, a preview 601 of four windows shows on the screen along with four application indicators 602-605.

The user thus can move the finger or stylus in parallel with one of the application indicators to select a certain window. The screen then will show such window to complete the unlock procedure.

During the authenticating process, if the input code does not match with the saved data, the authenticating process will stop and return to the locked mode.

In a preferred embodiment of the method and device according to the invention, the authentication routine is configured such that if the user's finger breaks contact with the touch screen at any time before completing the authentication, the routine returns the touch-controlled device to the locked mode.

It is also possible that the indicating input is combined with the moving direction and selected symbol. In this embodiment, the subroutine will determine the whole input code at the same time and the ring will present before entering the next stage. That is, multiple rings can also be displayed simultaneously. The preloaded password check subroutine can thus only compare the final input code, such as "out+clockwise+3+out+2+out+counterclockwise+9", at the end of one stage.

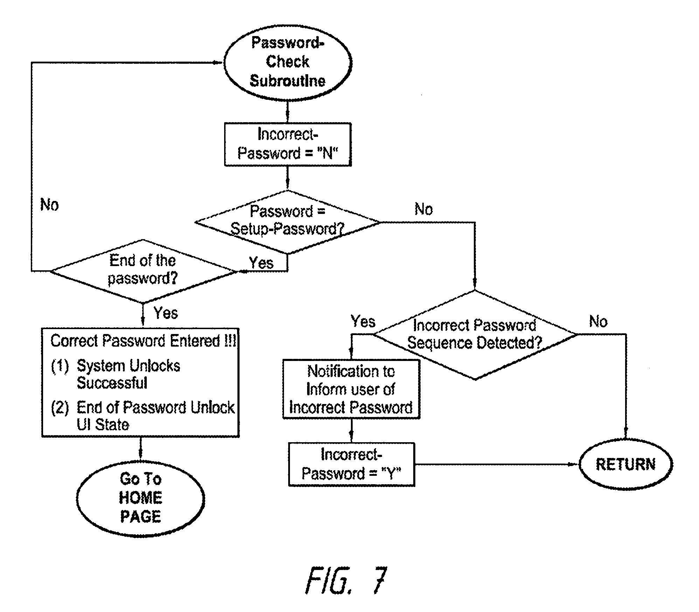

Figure 7 illustrates a flow chart of what the password check subroutine performs each time it is called by the touch-controlled device. After it has been called, the password check subroutine will first check if the input code is correct. If the input code is correct, the password-check subroutine will check if it is the last input code of the password. If it is the end of the password, such as the third input code, the touch-controlled device will process the unlock procedure. If the input code is not the end of the password, the password-check subroutine will wait to receive the next input code. During the checking procedure, if the input code is not correct, the touch-controlled device will be lucked again and stop the authorization. Before returning to the locked mode, the subroutine can also provide a notification to user to inform the incorrect code is inputted. Then, the user has to lift the finger to retouch the touch screen to start the authentication process.

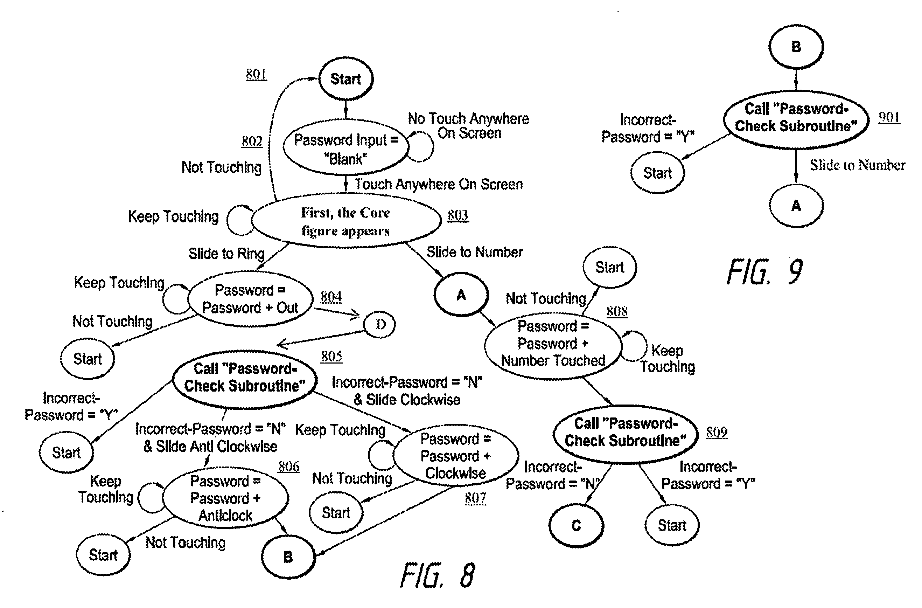

Figures 8-10 illustrate the above discussed procedure in flow chart form.

Figures 8 and 9 show the flow of displaying the core ring and inputting the input code.

When the user touches anywhere on the locked screen, as step 803, the screen displays the core figure 101. At step 804, the touch-controlled device records the input which is moving the finger to the ring 201. Then, at step 805, the touch-controlled device calls the password check subroutine to check if the password saved in the device is "out". After, or while, the password check subroutine checks the input code, the touch-controlled device records the next input code as either step 806 or step 807. Afterward, as the step 901, the touch-controlled device calls the password check subroutine to check the input code. If this is not the end of the password, the touch-controlled device keeps going through the check point A. Before the step 808, the touch-controlled device records the movement that user selects a number. Then the touch-controlled device proceeds step 809 to check this part of input code.

In one situation, after step 803, the touch-controlled device may only record the number that user's finger touches to proceed to step 808 and step 809.

If the first input is correct and the input code is not the end of the password, the touch-controlled device goes through check point C.

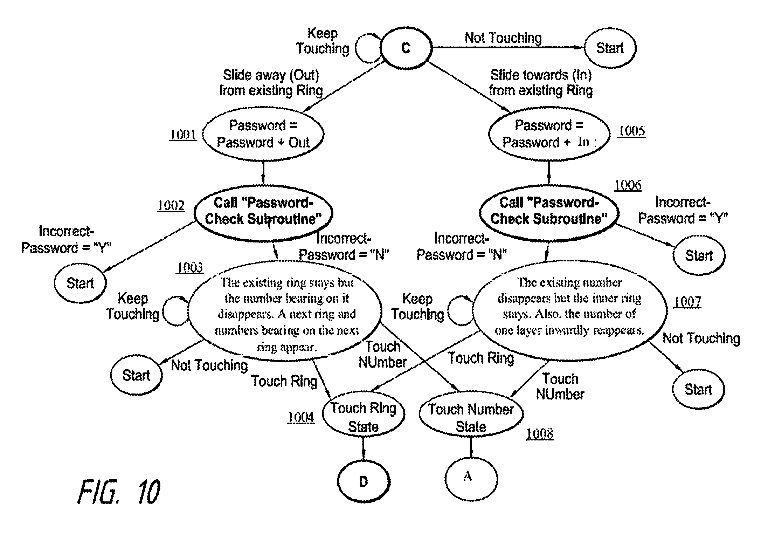

After check point C, the following procedure is presented in Figure 10.

At step 1001, the touch-controlled device records the movement of moving out from the existing figure (ring) 201. After step 1002, if the password is correct, the touch-controlled device proceeds to step 1003 so that the next existing ring stays but the alphanumerics of the previous ring 104 disappear. Also, in step 1003, the touch-controlled device displays the next ring 301 and the numbers of the next ring 302. Then, as step 104, if the touch-controlled device detects that user's finger or stylus touches the ring, the procedure goes back to point D of Figure 8 to the touch ring state. If the touch-controlled device detects that user's finger or stylus touches the number, the procedure goes back to point A of Figure 8 to the touch number state.

After node C, along pathway 1005, if the touch-controlled device detects the movement is sliding in and, in step 1006, the password check subroutine confirms the input code, the touch-controlled device proceeds to step 1007. In step 1007, the existing numbers disappear but the ring stays. Also, the number of one layer inwardly reappears.

During the procedure of Figures 8-10, if the password check subroutine decides it is the end of the password, the touch-controlled device will process the unlock procedure. If the input code is not correct, the touch-controlled device will be locked again and stop the authorization.

Also, the above discussed authenticating procedure can also be simplified to an embodiment that does not require any code. In this embodiment, the core ring may not show any symbols. Instead, the user needs only to move the finger in a certain distance with a predetermined direction of motion, such as outwardly, clockwise or counterclockwise; or successfully execute a plurality of such movements in succession, once again, preferably without breaking contact with the touch surface of the touch screen.

In the above embodiments, the surrounding area is everywhere between the previous ring and the ring presenting the symbols. However, the surrounding area for detecting the inward or outward movement can be anywhere that the password check subroutine can distinguish on the basis of prescribed user movements.

Also, any method that allows the user to easily input the input code, such as enlarging the certain area with a preview window to better distinguish the different aspects of the displays, can be incorporated into the present invention.

The symbols in the present invention could be from for example any alphabet, category or any combination of these.

The above discussed steps can also be used as a process to set up the input code saved in the computer.

In the capacitive or resistive types of touch screens, the user may actuate the touch screen by the finger or other passive object, such as a stylus. For example, in the resistive touch screen, the passive object pressed down on a point on the outer surface of the screen, so that the metallic layers within the screen become connected at the point. The touch-controlled device thus can register a touch event to start the authorization.

In the capacitive touch screen, while the human body, or any passive object which also an electrical conduction, touching the surface of the screen, the touch-controlled device measures a change in capacitance caused by the distortion of the screen's electrostatic field. The touch event thus is created and sent to the processor of the touch-controlled device to start the authorization.

In the other types of touch screen, users may not even need to touch the screen. Take the optical imaging touch screen for example. The user's finger may be detected by the sensor or camera and thus the user only needs to place his finger in the detecting area to start the authentication. Another example of non-contact screens would be those employing very short range capacitive proximity sensing or active IR detection. In such alternatives, the user's finger or other input device, although not in physical contact with the screen nevertheless preferably remains continuously within the sensing range of the touch-controlled device during the entire authentication process, with a non-detection of the user's finger causing the routine to revert to a locked screen state.

Further, a touch sensitive pad may also be used as a touch screen here. For example, a touch sensitive pad embedded on the surface of a laptop which is used to control the volume of the speakers can also be locked and authenticated via the similar process. When the user touches the sensitive pad, the LEDs embedded behind the first ring are turned on so the core ring is highlighted. Then, the user moves the finger clockwise for a certain distance to unlock the sensitive pad. After the authentication process, the user can start to tune the volume through the sensitive pad. At least in this embodiment, the core ring is a figure that is printed on the screen. When the user actuates the sensitive pad, the touch-controlled device only need to turn on certain LEDs to display the core ring.

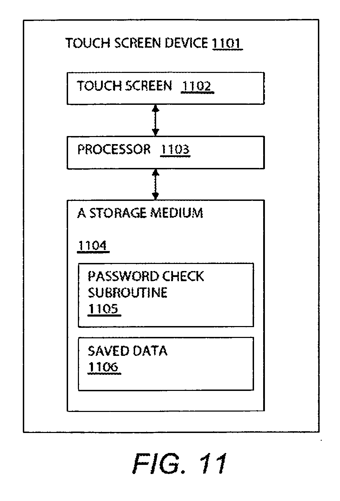

Figure 11 illustrates a touch-controlled device which is capable of processing the authenticating procedure. The touch-controlled device 1101 includes a touch screen 1102, a processor 1103, and a non-transitory computer-readable storage medium 1104. The touch-controlled device 1101 is capable of displaying a core figure 101 which includes a center and a surrounding area on the touch screen 1102.

Upon the touch screen 1102 being touched, a signal is sent to the processor 1103. Upon receiving the signal, the processor calls the storage medium 1104 and processes the response from the storage medium to display the core figure on the touch screen. If the touch screen 1102 receives a first input, another signal is then sent to the processor 1103 to check with a saved data 1106 saved in the storage medium 1104 via a password check subroutine 1105. The processor 1103 then is capable of displaying the corresponding response on the touch screen 1102. The above description of preferred embodiments of the present invention is not intended to limit the scope of the present invention.

## Claims

1. A touch-controlled device (1101), comprising:
a touch screen (1102);
a processor (1103); and
a non-transitory computer-readable storage medium (1104) encoded with a computer program stored thereon, the touch-controlled device (1101) being configured to authenticate a user of the touch-controlled device (1101) by displaying a core figure (101) which comprises a center (102) and a surrounding area (103) upon the touch screen (1102) being touched to receive an input code, and checking the input which is inputted by a movement of moving a touching member while maintaining contact with a detecting area from the center (102) toward the surrounding area (103) for authentication, wherein
the core figure (101) further comprises a plurality of first symbols arranged along a periphery thereof, and the touch-controlled device (1101) is further configured to authenticate the user of the touch-controlled device (1101) to move the touching member to a selected displayed symbol; and the first symbols are a series of alphanumeric characters, and wherein
when the user moves the touching member outwardly or inwardly from the selected displayed symbol toward a second selected displayed symbol among a newly displayed second set of symbols, the plurality of first symbols are no longer displayed on the screen.

2. A method for enabling authentication of a user of a touch-controlled device (1101) having a touch screen (1102), the method comprising:
providing a computer implementable program sufficient to present, upon receiving a initiate input, a core figure (101) which comprises a center (102) and a surrounding area (103);
recording an input code in response to a movement of the touching member which is moving, while maintaining contact with a detecting area, from the center (102) toward the surrounding area (103);
comparing the input code with a saved data; and
unlocking the touch screen (1102) if the input code matches the saved data, wherein
the core figure (101) further comprises a plurality of first symbols arranged along a periphery thereof, and further comprising moving the touching member to a selected displayed symbol; and the first symbols are a series of alphanumeric characters, and
wherein the movement further comprises moving the touching member outwardly or inwardly from the selected displayed symbol toward a second selected displayed symbol among a newly displayed second set of symbols, wherein the plurality of first symbols are no longer displayed on the screen.

3. The touch-controlled device (1101) according to claim 1 or the method according to claim 2, wherein the input code is generated upon detection by the touch screen (1102) of said movement having occurred over a predetermined distance.

4. The touch-controlled device (1101) according to claim 1 or the method according to claim 2, wherein the input code is generated upon detection by the touch screen (1102) of said movement being followed by moving clockwise or moving counterclockwise along a periphery of the surrounding area (103).

5. The method according to claim 2, wherein the movement further comprises moving the touching member outwardly or inwardly from the second selected displayed symbol toward a third selected displayed symbol among a newly displayed third set of symbols, wherein the second set of symbols are no longer displayed on the screen.

6. The method according to claim 5, wherein the moving of the touching member from the second selected displayed symbol toward the third selected displayed symbol is inward movement, and the third set of symbols are displayed in substantially the same locations as the plurality of first symbols had been displayed.

7. The method according to claim 5, wherein the touch-controlled device (1101) has a password check subroutine to check the input code and the selected displayed symbols to determine whether the touch-controlled device (1101) should process the authentication.

8. The method according to claim 2, wherein the touch-controlled device (1101) has a password check subroutine to stop the authentication when the touching member leaves the touch screen (1102) or when the input code or selected symbols do not match the saved data of the touch-controlled device (1101).

9. The method according to claim 8, wherein the surrounding area (103) receives the input code and the password check subroutine stops the authentication when the touching member moves outside of the surrounding area (103).

10. The method according to claim 2, wherein the authentication further comprises a preview shown on the touch screen (1102) with at least two windows and at least two application indicators and selecting a window by moving the touching member in parallel with an application indicator.

11. The method according to claim 2, wherein the saved data is saved by a password setup process in the device which records the similar process of the authentication.

## Patentansprüche

1. Berührungsgesteuerte Vorrichtung (1101), aufweisend:
einen berührungsempfindlichen Bildschirm (1102);
einen Prozessor (1103); und
ein nicht-flüchtiges, Computer-lesbares Speichermedium (1104), das mit einem darauf gespeicherten Computerprogramm verschlüsselt ist, wobei die berührungsgesteuerte Vorrichtung (1101) so gestaltet ist, dass sie einen Nutzer der berührungsgesteuerten Vorrichtung (1101) authentifiziert, indem sie eine ein Zentrum (102) und einen umgebenden Bereich (103) aufweisende Kernabbildung (101) auf dem Bildschirm (1102) anzeigt, welcher berührt wird, um einen Eingabe-Code zu empfangen, und die Eingabe überprüft, die durch eine Bewegung eingegeben wird, mit der ein Kontaktelement unter Aufrechterhaltung eines Kontakts mit einem Erfassungsbereich für eine Authentifizierung vom Zentrum (102) zum umgebenden Bereich (103) bewegt wird, wobei
die Kernabbildung (101) ferner eine Mehrzahl von ersten Symbolen aufweist, die entlang eines Randes von ihr angeordnet sind, und die berührungsgesteuerte Vorrichtung (1101) ferner so gestaltet ist, dass sie den Nutzer der berührungsgesteuerten Vorrichtung (1101) authentifiziert, um das Kontaktelement zu einem ausgewählten angezeigten Symbol zu bewegen; und die ersten Symbole eine Reihe von alphanumerischen Zeichen sind, und wobei
dann, wenn der Nutzer das Kontaktelement vom ausgewählten angezeigten Symbol aus nach außen oder nach innen in Richtung auf ein zweites ausgewähltes angezeigtes Symbol aus einem neu angezeigten zweiten Satz von Symbolen bewegt, die Mehrzahl von ersten Symbolen nicht mehr auf dem Bildschirm angezeigt wird.

2. Verfahren, das eine Authentifizierung eines Nutzers einer berührungsgesteuerten Vorrichtung (1101), die einen berührungsempfindlichen Bildschirm (1102) aufweist, ermöglicht, wobei das Verfahren umfasst:
Bereitstellen eines Computer-implementierbaren Programms, das genügt, um nach Empfang einer Anfangseingabe eine Kernabbildung (101) darzustellen, die ein Zentrum (102) und einen umgebenden Bereich (103) aufweist;
Aufzeichnen eines Eingabe-Codes als Reaktion auf eine Bewegung des Kontaktelements, das sich unter Aufrechterhaltung eines Kontakts mit einem Erfassungsbereich vom Zentrum (102) zum umgebenden Bereich (103) bewegt;
Vergleichen des Eingabe-Codes mit gespeicherten Daten; und
Entsperren des berührungsempfindlichen Bildschirms (1102), wenn der Eingabe-Code mit den gespeicherten Daten übereinstimmt, wobei
die Kernabbildung (101) ferner eine Mehrzahl von ersten Symbolen aufweist, die entlang eines Randes von ihr angeordnet sind, und ferner das Bewegen des Kontaktelements zu einem ausgewählten angezeigten Symbol umfassend; und die ersten Symbole eine Reihe von alphanumerischen Zeichen sind, und
wobei die Bewegung ferner das Bewegen des Kontaktelements nach außen oder nach innen vom ausgewählten angezeigten Symbol zu einem zweiten ausgewählten angezeigten Symbol aus einem neu angezeigten zweiten Satz von Symbolen umfasst, wobei die Mehrzahl erster Symbole nicht mehr auf dem Bildschirm angezeigt wird.

3. Berührungsgesteuerte Vorrichtung (1101) nach Anspruch 1 oder Verfahren nach Anspruch 2, wobei der Eingabe-Code erzeugt wird, nachdem der berührungsempfindliche Bildschirm (1102) erfasst hat, dass die Bewegung über eine vorgegebene Strecke stattgefunden hat.

4. Berührungsgesteuerte Vorrichtung (1101) nach Anspruch 1 oder Verfahren nach Anspruch 2, wobei der Eingabe-Code erzeugt wird, nachdem der berührungsempfindliche Bildschirm (1102) erfasst hat, dass auf die Bewegung eine im Uhrzeigersinn oder gegen den Uhrzeigersinn ausgeführte Bewegung entlang eines Randes des umgebenden Bereichs (103) gefolgt ist.

5. Verfahren nach Anspruch 2, wobei die Bewegung ferner das Bewegen des Kontaktelements nach außen oder nach innen von dem zweiten ausgewählten angezeigten Symbol zu einem dritten ausgewählten angezeigten Symbol aus einem neu angezeigten dritten Satz von Symbolen umfasst, wobei der zweite Satz von Symbolen nicht mehr auf dem Bildschirm angezeigt wird.

6. Verfahren nach Anspruch 5, wobei das Bewegen des Kontaktelements vom zweiten ausgewählten angezeigten Symbol zum dritten ausgewählten angezeigten Symbol eine einwärts gerichtete Bewegung ist und der dritte Satz von Symbolen im Wesentlichen an den gleichen Stellen angezeigt wird, an denen die Mehrzahl von ersten Symbolen angezeigt wurde.

7. Verfahren nach Anspruch 5, wobei die berührungsgesteuerte Vorrichtung (1101) eine Passwortüberprüfungs-Unterroutine aufweist, um den Eingabe-Code und die ausgewählten angezeigten Symbole zu überprüfen, um zu bestimmen, ob die berührungsgesteuerte Vorrichtung (1101) die Authentifizierung verarbeiten sollte.

8. Verfahren nach Anspruch 2, wobei die berührungsgesteuerte Vorrichtung (1101) eine Passwortüberprüfungs-Unterroutine aufweist, um die Authentifizierung zu unterbrechen, wenn das Kontaktelement den berührungsempfindlichen Bildschirm (1102) verlässt oder wenn der Eingabe-Code oder die ausgewählten Symbole nicht mit den gespeicherten Daten der berührungsgesteuerten Vorrichtung (1101) übereinstimmen.

9. Verfahren nach Anspruch 8, wobei der umgebende Bereich (103) den Eingabe-Code empfängt und die Passwortüberprüfungs-Unterroutine die Authentifizierung unterbricht, wenn sich das Kontaktelement außerhalb des umgebenden Bereichs (103) bewegt.

10. Verfahren nach Anspruch 2, wobei die Authentifizierung ferner beinhaltet, dass auf dem berührungsempfindlichen Bildschirm (1102) eine Vorschau mit mindestens zwei Fenstern und mindestens zwei Applikationsindikatoren angezeigt wird, und dass durch Bewegen des Kontaktelements parallel zu einem Applikationsindikator ein Fenster ausgewählt wird.

11. Verfahren nach Anspruch 2, wobei die gespeicherten Daten durch einen Passwort-Einrichtungsprozess in der Vorrichtung gespeichert werden, die den ähnlichen Authentifizierungsprozess aufzeichnet.

## Revendications

1. Dispositif à commande tactile (1101) comprenant :
un écran tactile (1102) ;
un processeur (1103) ; et
un moyen de stockage non transitoire lisible par ordinateur (1104) encodé avec un programme informatique stocké sur celui-ci, le dispositif à commande tactile (1101) étant configuré pour authentifier un utilisateur du dispositif à commande tactile (1101) en affichant un symbole clé (101) comprenant un centre (102) et une zone périphérique (103) lorsque l'écran tactile (1102) est touché pour recevoir un code d'entrée, et en vérifiant l'entrée saisie par un mouvement de déplacement d'un élément tactile, tout en maintenant le contact avec une zone de détection allant du centre (102) vers la zone périphérique (103) pour l'authentification, dans lequel
le symbole clé (101) comprend en outre une pluralité de premiers symboles agencés le long d'une périphérie de celui-ci, et le dispositif à commande tactile (1101) est en outre configuré pour authentifier l'utilisateur du dispositif commande tactile (1101) pour déplacer l'élément tactile vers un symbole affiché sélectionné ; et les premiers symboles sont une série de caractères alphanumériques, et dans lequel
lorsque l'utilisateur déplace l'élément tactile vers l'extérieur ou vers l'intérieur, depuis le symbole affiché sélectionné vers un deuxième symbole affiché sélectionné parmi une nouvelle deuxième série de symboles affichés, la pluralité de premiers symboles ne s'affiche plus sur l'écran.

2. Procédé pour permettre l'authentification d'un utilisateur d'un dispositif à commande tactile (1101) possédant un écran tactile (1102), le procédé comprenant :
la mise à disposition d'un programme exécuté par ordinateur, conçu pour présenter un symbole clé (101) comprenant un centre (102) et une zone périphérique (103), lors de la réception d'une entrée initiale,
l'enregistrement d'un code d'entrée en réponse à un déplacement de l'élément tactile mobile, tout en maintenant le contact avec une zone de détection, allant du centre (102) vers la zone périphérique (103) ;
la comparaison du code d'entrée avec des données sauvegardées ; et
le déverrouillage de l'écran tactile (1102) si le code d'entrée correspond aux données sauvegardées, dans lequel
le symbole clé (101) comprend en outre une pluralité de premiers symboles agencés le long d'une périphérie de celui-ci, et comprenant en outre le déplacement de l'élément tactile vers un symbole affiché sélectionné ; et les premiers symboles sont une série de caractères alphanumériques, et
dans lequel le déplacement comprend en outre le déplacement de l'élément tactile vers l'extérieur ou vers l'intérieur, depuis le symbole affiché sélectionné vers un deuxième symbole affiché sélectionné parmi une nouvelle deuxième série de symboles affichés, la pluralité de premiers symboles ne s'affichant alors plus sur l'écran.

3. Dispositif à commande tactile (1101) selon la revendication 1 ou procédé selon la revendication 2, dans lequel le code d'entrée est généré lors d'une détection par l'écran tactile (1102) dudit déplacement effectué sur une distance prédéterminée.

4. Dispositif à commande tactile (1101) selon la revendication 1 ou procédé selon la revendication 2, dans lequel le code d'entrée est généré lors de la détection par l'écran tactile (1102) dudit déplacement, suivi par le déplacement dans le sens des aiguilles d'une montre ou par le déplacement dans le sens inverse des aiguilles d'une montre, le long d'une périphérie de la zone périphérique (103).

5. Procédé selon la revendication 2, dans lequel le déplacement comprend en outre le déplacement de l'élément tactile vers l'extérieur ou vers l'intérieur, depuis le deuxième symbole affiché sélectionné vers un troisième symbole affiché sélectionné parmi une nouvelle troisième série de symboles affichés, la deuxième série de symboles ne s'affichant alors plus sur l'écran.

6. Procédé selon la revendication 5, dans lequel le déplacement de l'élément tactile depuis le deuxième symbole affiché sélectionné vers le troisième symbole affiché sélectionné est un déplacement vers l'intérieur, et la troisième série de symboles s'affiche substantiellement aux mêmes endroits où la pluralité de premiers symboles s'était affichée.

7. Procédé selon la revendication 5, dans lequel le dispositif à commande tactile (1101) comporte une sous-routine de vérification de mot de passe, pour vérifier le code d'entrée et les symboles affichés sélectionnés afin de déterminer si le dispositif à commande tactile (1101) devrait effectuer une authentification.

8. Procédé selon la revendication 2, dans lequel le dispositif à commande tactile (1101) comporte une sous-routine de vérification de mot de passe pour arrêter l'authentification lorsque l'élément tactile quitte l'écran tactile (1102) ou lorsque le code d'entrée ou les symboles sélectionnés ne correspondent pas aux données sauvegardées du dispositif commande tactile (1101).

9. Procédé selon la revendication 8, dans lequel la zone périphérique (103) reçoit le code d'entrée et la sous-routine de vérification de mot de passe arrête l'authentification lorsque l'élément tactile est déplacé à l'extérieur de la zone périphérique (103).

10. Procédé selon la revendication 2, dans lequel l'authentification comprend en outre un pré-aperçu représenté sur l'écran tactile (1102), avec au moins deux fenêtres et au moins deux indicateurs d'application, et la sélection d'une fenêtre par déplacement de l'élément tactile en parallèle avec un indicateur d'application.

11. Procédé selon la revendication 2, dans lequel les données sauvegardées sont sauvegardées par une opération de création de mot de passe dans le dispositif, enregistrant l'opération similaire d'authentification.
